# EUROPEAN PATENT APPLICATION

(11) **EP 4 686 584 A1**
(43) Date of publication of application: **04.02.2026**
(21) Application number: 25189108.1
(22) Date of filing: 11.07.2025
(51) Int. Cl.: B60C 11/16

(54) **TIRE STUD AND TIRE**

(30) Priority: 30.07.2024 US 202418788886
(71) Applicant: The Goodyear Tire & Rubber Company, Akron, OH 44316 (US)
(72) Inventor: PONS, Frederic Michel-Jean, F-57100 Thionville (FR); WINDESHAUSEN, Michel Jean Yves, 6780 Messancy (BE)
(74) Representative: Kutsch, Bernd

(57) **Abstract**

A tire stud (10) is disclosed comprising a stud body (20) and a pin (30) comprising a first portion P₁, P'₁ and a second portion P₂, P'₂, P₁. P'₁ is adjacent to P₁₂ P'₂ in a direction along the central axis (z, z') of the pin. P₁, P'₁ projects out of the stud body. P₂, P'₂ are inserted in the stud body (20). P₁, P'₁ has a polygonal cross section in a plane perpendicular to the central axis (z, z'), said cross section being symmetrical with regard to an axis (y, y') within the plane. In a first aspect, the polygonal cross section has six sides, namely a first side C1, a second side C2, a third side C3, a fourth side C4, a fifth side C5 and a sixth side C6, wherein C1 is adjacent to C2 and the intersection of C1 and C2 is a point S(12) located on the axis (y). C1 and C2 form an angle a2 on the outer surface of the pin with 90° < a2 < 170°. In a second aspect, the polygonal cross section has eight sides, namely a first side C'1, a second side C'2, a third side C'3, a fourth side C'4, a fifth side C'5, a sixth side C'6, a seventh side C'7 and an eight side C'8, wherein C'1 is adjacent to the second side C'2 and the intersection of C'1 and C'2 is a point S'(12) and C'4 is adjacent to C'5 and the intersection of C'4 and C'5 is a point S'(45), with S'(12) being symmetrical about the axis (y') to S'(45). C'1 and C'2 form an angle a'2 with 90° < a'2 < 170° and C'4 and C'5 form an angle a'3, with a'2 = a'3.

## Description

### FIELD OF THE INVENTION

The present invention relates to tire studs, each tire stud comprising a stud body and a pin, wherein at least a portion of the pin has a particular polygonal cross section. The present invention further relates to a tire or a pneumatic tire comprising the tire stud of the present invention. Such tire studs are of particular value for use on winter, snow and/or ice tires.

### BACKGROUND OF THE INVENTION

Studs for winter tires have been known for decades and have helped to significantly improve traction characteristics on snow and particularly ice-covered surfaces to improve the grip of the tire to icy roads and other icy pavements. For example, tire studs typically have a body which is made of a metal material, such as aluminum, and have a pin extending from the body for ensuring non-skid behavior of the tire on icy roads. Polymer studs have also been developed. While researches have been made on the shape of the stud body for improving tire performances, there is still a need for improvement in the stud design.

In particular, with the tire stud of the present invention it was found that by adapting the design of the pin in the stud body of a tire stud it was possible to improve the grip of the tire compared to tire studs already existing on the market. Indeed, it has been found that by modifying the design of the pin it was possible to improve the grip without impairing the durability of the tire stud.

### SUMMARY OF THE INVENTION

The invention relates to a tire stud in accordance with claim 1 and to a tire in accordance with claim 14.

Dependent claims refer to preferred embodiments of the invention.

In a first preferred aspect, the present invention relates to a tire stud comprising a stud body and a pin comprising a first portion P1 and a second portion P2, P1 being adjacent to P2 in a direction along the central axis (z) of the pin, P1 projecting out of the stud body and P2 being inserted in the stud body, wherein P1 has a polygonal cross section in a plane perpendicular to the central axis (z), said cross section being symmetrical with regard to an axis (y) within the plane, wherein the polygonal cross section has six sides being a first side C1, a second side C2, a third side C3, a fourth side C4, a fifth side C5 and a sixth side C6, wherein C1 is adjacent to C2 and the intersection of C1 and C2 is a point S(12) located on the axis (y), C1 and C2 form an angle a2 on the outer surface of the pin, and wherein 90° < a2 < 170°.

In a second preferred aspect, the present invention further relates to a tire stud comprising a stud body and a pin comprising a first portion P'₁ and a second portion P'₂, P'₁ being adjacent to P'₂ in a direction along the central axis (z') of the pin, P'₁ projecting out of the stud body and P'₂ being inserted in the stud body; wherein P'₁ has a polygonal cross section in a plane perpendicular to the central axis (z'), said cross section being symmetrical with regard to an axis (y') within the plane, wherein the polygonal cross section has eight sides being a first side C'1, a second side C'2, a third side C'3, a fourth side C'4, a fifth side C'5, a sixth side C'6, a seventh side C'7 and an eight side C'8; wherein C'1 is adjacent to the second side C'2 and the intersection of C'1 and C'2 is a point S'(12) and C'4 is adjacent to C'5 and the intersection of C'4 and C'5 is a point S'(45), with S'(12) being symmetrical about the axis (y') to S'(45), and wherein C'1 and C'2 form an angle a'2, with 90° < a'2 < 170° and C'4 and C'5 form an angle a'3, with a'2 = a'3.

The present invention further relates to a tire or pneumatic tire comprising at least one tire stud according to the present invention.

### DEFINITIONS

In the context of the present invention, the term "vertex" or "vertices" refers to the corner or corners of the polygonal cross section of the portion P1 or P'1 of the pin.

In the context of the present invention, the normal vector of the cross-sectional plane is parallel to the central axis (z) or (z') of the pin.

In the context of the present invention, the term "projecting out of" and "protruding from" are used interchangeably.

### BRIEF DESCRIPTION OF DRAWINGS

The invention will be described by way of example and with reference to the accompanying drawings in which:
FIG. 1 schematically represents a cross section of a portion P1 of the pin of a tire stud according to the present invention, the stud body not being represented in FIG.1.
FIG.2 schematically represents a cross section of a portion P1 of the pin of a tire stud according to the present invention, the stud body not being represented in FIG.2.
FIG.3 schematically represents an external perspective view of the pin of a tire stud according to the present invention. In this figure, the pin is represented outside of the stud body.
FIG. 4 schematically represents an external perspective view of a tire stud according to the present invention.
FIG. 5 schematically represents a cross section of a tire stud according to US 11,084,331 B2.
FIG. 6 schematically represents a cross section of a portion P'1 of the pin of a tire stud according to the present invention, the stud body not being represented in FIG.6.
FIG. 7 schematically represents a cross section of a tire stud according to the present invention.

### DETAILED DESCRIPTION OF PREFERRED EMBODIMENTS OF THE INVENTION

The present invention relates to tire stud comprising a stud body and a pin comprising a first portion P₁ and a second portion P₂, P₁ being adjacent to P₂ in a direction along the central axis (z) of the pin, P₁ projecting out of the stud body and P₂ being inserted in the stud body, wherein P1 has a polygonal cross section in a plane perpendicular to the central axis (z), said cross section being symmetrical with regard to an axis (y) within the plane, wherein the polygonal cross section has six sides being a first side C1, a second side C2, a third side C3, a fourth side C4, a fifth side C5 and a sixth side C6, wherein C1 is adjacent to C2 and the intersection of C1 and C2 is a point S(12) located on the axis (y), C1 and C2 form an angle a2 on the outer surface of the pin, and wherein 90° < a2 < 170°.

Preferably, the width W of the polygonal cross section is in the range of from 2.2 to 3.8 mm, more preferably of from 2.4 to 3.6 mm. The width W of the polygonal section is the distance between S(56) and S(34), S(56) being the intersection point of C5 and C6, and S(34) being the intersection point of C3 and C4.

Preferably, one or more of the six sides C1, C2, C3, C4, C5, C6 are planar, preferably each of the six sides is planar.

Preferably, one or more of the vertices of the polygonal cross section are chamfered, more preferably the vertices of the polygonal cross section are chamfered.

Preferably, the portion P₁ of the pin has one or more chamfered edges. For example, the outermost surface of P1, namely for contacting the surface of a road, has one or more chamfers. The portion P1 of the pin is for contacting the surface of a road. It is protruding from a tread of a pneumatic tire once the tire stud is inserted therein.

Preferably, the height H of the polygonal cross section is in the range of from 1.5 to 1.9 mm, more preferably of from 1.7 to 1.9 mm, the height H of the polygonal cross section being the distance between A and S(45), A being the intersection point between the axis (y) and the line passing by S(61) and S(23), S(23) being the intersection point of C2 and C3, S(45) being the intersection point of C4 and C5 and located on the axis (y), and S(61) being the intersection point of C6 and C1.

Preferably, in the polygonal cross section, the distance between S(12) and S(45) is in the range of from 1.1 to 1.6 mm, more preferably in the range of from 1.25 to 1.45 mm, S(45) being the intersection point of C4 and C5 and located on the axis (y).

Preferably, C3 is parallel to C6.

Preferably, the length of C3 is substantially equal, more preferably equal to the length of C6.

Preferably, the length of C3 is in the range of from 0.3 to 0.7 mm, more preferably in the range of from 0.4 to 0.6 mm.

Preferably, 95° < a2 < 165°, more preferably 105° < a2 < 160°, more preferably 120° < a2 < 155°.

Preferably, C4 is adjacent to C5 and the intersection of C4 and C5 is a point S(45) located on the axis (y), C4 and C5 form an angle a1 in the inner surface of the pin, with a1 < a2.

Preferably, a1 > 75°, more preferably a1 > 80°.

Preferably, the portion P1 projecting out of the stud body has a height h(P1) in the range of from 1.0 to 1.7 mm, more preferably of from 1.0 to 1.5 mm, more preferably of from 1.0 to 1.4 mm.

Preferably, the polygonal cross section area of the pin is in the range of from 2.0 to 3.8 mm², more preferably from 2.3 to 3.6 mm², more preferably in the range of from 2.4 to 3.5 mm².

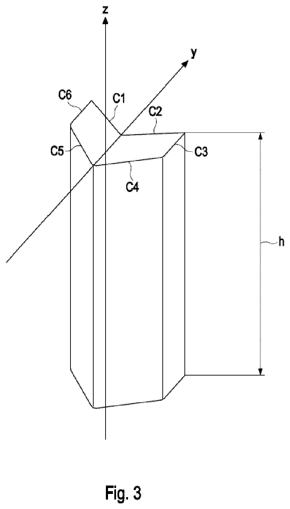

Preferably, the pin has generally a polygonal cross section as defined in the foregoing along its height h along the central axis (z) as illustrated by FIG. 3.

The present invention further relates to a tire stud comprising a stud body and a pin comprising a first portion P'₁ and a second portion P'₂, P'₁ being adjacent to P'₂ in a direction along the central axis (z') of the pin, P'₁ projecting out of the stud body and P'₂ being inserted in the stud body, wherein P'₁ has a polygonal cross section in a plane perpendicular to the central axis (z'), said cross section being symmetrical with regard to an axis (y') within the plane, wherein the polygonal cross section has eight sides being a first side C'1, a second side C'2, a third side C'3, a fourth side C'4, a fifth side C'5, a sixth side C'6, a seventh side C'7 and an eight side C'8, wherein C'1 is adjacent to the second side C'2 and the intersection of C'1 and C'2 is a point S'(12) and C'4 is adjacent to C'5 and the intersection of C'4 and C'5 is a point S'(45), with S'(12) being symmetrical about the axis (y') to S'(45), and wherein C'1 and C'2 form an angle a'2, with 90° < a'2 < 170° and C'4 and C'5 form an angle a'3, with a'2 = a'3.

Preferably, the width W' of the polygonal cross section is in the range of from 2.2 to 3.8 mm, more preferably of from 2.4 to 3.6 mm, W' bbeing the distance between S'(56) and S'(18), S'(56) being the intersection point of C'5 and C'6, and S'(18) being the intersection point of C'1 and C'8.

Preferably, one or more of the eight sides C'1, C'2, C'3, C'4, C'5, C'6, C'7, C'8 are planar, more preferably each of the eight sides is planar.

Preferably, one or more of the vertices of the polygonal cross section are chamfered, more preferably the vertices of the polygonal cross section are chamfered.

Preferably, the portion P'₁ of the pin has one or more chamfered edges. For example, the outermost surface of P'1, namely for contacting the surface of a road, has one or more chamfers. The portion P'1 of the pin is for contacting the surface of a road. It is protruding from a tread of a pneumatic tire once the tire stud is inserted therein.

Preferably, the height H' of the polygonal cross section is in the range of from 2.2 to 2.6 mm, more preferably of from 2.3 to 2.5 mm , H' being the distance between C'7 and C'3 along the axis (y').

Preferably, 95° < a'2 < 160°, more preferably 100° < a'2 < 150°.

Preferably, the line passing by S'(56) and S'(45) and the line passing by S'(18) and S'(12) form an angle a'1 in the inner surface of the pin, with a'1 < a'2 , S'(56) being the intersection point of C'5 and C'6, S'(45) being the intersection point of C'4 and C'5, S'(18) being the intersection point of C'8 and C'1 and S'(12) being the intersection point of C'1 and C'2.

Preferably, a'1 > 80°, more preferably a'1 > 90°, more preferably a'1 > 95°.

Preferably, the portion P'1 projecting out the stud body has a height h(P'1) in the range of from 1.0 to 1.7 mm, more preferably of from 1.0 to 1.5 mm, more preferably of from 1.0 to 1.4 mm.

Preferably, the polygonal cross section area of the pin is in the range of from 2.5 to 3.5 mm², more preferably in the range of from 2.75 to 3.25 mm².

In the context of the present invention, in the tire studs according to the present invention, it is preferred that the pin comprises a metal and/or ceramic material, wherein the metal is one or more of tungsten carbide and steel, more preferably tungsten carbide.

Preferably, the pin consists essentially of tungsten carbide.

Preferably, the stud body comprises, more preferably essentially consists of, a metal, preferably aluminum.

Alternatively, preferably the stud body comprises at least one polymer, being more preferably selected from the group consisting of polyketone (PK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and mixtures of two or more thereof. Preferably the polyketone is an aliphatic polyketone or an aromatic polyketone, such as polyetheretherketone (PEEK).

In the context of the present invention, SPBD offers the advantage of becoming securely bound to the rubber of the tire tread. It is believed that the syndiotactic 1,2-polybutadiene (SPBD) co-cures with the rubber of the tire tread during the curing of the tire, resulting in a strong adhesion between the SPBD and the tire tread. SPBD can be prepared in an inert organic solvent utilizing the technique described in US 3,901,868 B or in an aqueous medium utilizing the process described in US 4,506,031 B. The latter more specifically reveals a process for producing polybutadiene composed essentially of SPBD comprising the steps of: (A) preparing a catalyst component solution by dissolving, in an inert organic solvent containing 1,3-butadiene (a) at least one cobalt compound selected from the group consisting of (i) beta-diketone complexes of cobalt, (ii) beta-keto acid ester complexes of cobalt, (iii) cobalt salts of organic carboxylic acids having 6 to 15 carbon atoms, and (iv) complexes of halogenated cobalt compounds of the formula CoXn, wherein X represents a halogen atom and n represents 2 or 3, with an organic compound selected from the group consisting of tertiary amine alcohols, tertiary phosphines, ketones, and N,N-dialkylamides, and (b) at least one organoaluminum compound of the formula AIR3, wherein R represents a hydrocarbon radical of 1 to 6 carbon atoms; (B) preparing a reaction mixture by mixing said catalyst component solution with a 1,3-butadiene/water mixture containing desired amounts of said 1,3-butadiene; (C) preparing a polymerization mixture by mixing carbon disulfide throughout said reaction mixture, and (D) polymerizing said 1,3-butadiene in said polymerization mixture into polybutadiene while agitating said polymerization mixture. In the process described therein the crystallinity and melting point of the SPBD can be controlled by adding alcohols, ketones, nitriles, aldehydes or amides to the polymerization mixture.

Preferably, the SPBD utilized for preparing the stud body comprised in the tire stud of the present invention has a melting point of 160° C or less, more preferably in the range of from 70°C to 160°C, more preferably in the range of from 80° C to 150° C, more preferably in the range of from 90° C to 125° C. The melting points referred to herein are the minimum endotherm values determined from DSC (differential scanning calorimetry) curves.

It is conceivable that the stud body comprises a blend of polymers, including SPDB (from 25 to 75 wt.-% based on the weight of the blend) and at least one rubber (from 75 to 25 wt.-% based on the weight of the blend) which is curable with the SPBD. The rubber component used in such blends can be virtually any type of elastomer which contains unsaturation that allows for sulfur curing. Typically, the elastomer will be one or more polydiene rubbers. Some representative examples of suitable polydiene rubbers include cis-1,4-polybutadiene, natural rubber, synthetic polyisoprene, styrene butadiene rubber, EPDM (ethylenepropylene- diene monomer) rubbers, isoprene-butadiene rubbers, and styreneisoprene-butadiene rubbers. In many cases it will be desirable to utilize a combination of diene rubbers in the blend. For instance, the rubber portion of the blend can be a combination of chlorobutyl rubber, natural rubber, and EPDM rubber. Preferably, the rubber component comprises from 30 to 80 wt.-%, more preferably from 55 to 65 wt.-%, chlorobutyl rubber, from 15 to 55 wt.-%, more preferably from 25 to 45 wt.-%, natural rubber, and from 2 to 10 wt.-%, more preferably from 3 to 7 wt.-%, EPDM, the weight percent being based on the weight of the rubber component.

In the context of the present invention, it is believed that the inclusion of high content of SPBD in the stud body results in better adhesion, abrasion, and tear resistance for the cured material. High contents of SPBD also result in increased green strength and stiffness. Additionally, it is believed that the use of high levels of SPBD reduces green tack which makes handling. However, the incorporation of large amounts of SPBD into the blend also results in reduced flexibility and modulus. Accordingly, for the best balance of overall properties, the blend utilized preferably contains from 33 to 67 wt.-% SPBD and from 67 to 33 wt.-% co-curable rubbers. More preferably, the blend in the stud body contains from 45 to 55 wt.-% SPBD and from 55 to 45 wt.-% of the elastomeric component.

The SPBD used for preparing the blend can be in powder or pellet form. The SPBD powder or pellets can be mixed into the rubber component utilizing standard mixing techniques. However, the mixing is normally carried out at a temperature which is at least as high as the melting point of the SPBD being utilized. During the mixing procedure, the SPBD powder pellets are fluxed into the rubber with additional desired compounding ingredients. Such mixing is typically carried out in a Banbury mixer, a mill mixer or in some other suitable type of mixing device.

Such blends of SPBD and rubber component may further contain other standard rubber chemicals. For instance, such blends may contain sulfur and at least one desired colorant or pigment, e.g. titanium dioxide can be of interest as it can be used as pigment and filler. They will also typically contain other rubber chemicals, such as antioxidants, accelerators, oils, and waxes in conventional amounts. The typical content of sulfur and first and secondary accelerators are described in US 2021/0008930A1.

Alternatively, or in addition to SPBD, other polymers such as those disclosed in the foregoing can be used for the stud body.

Optionally, the polymeric stud body is reinforced with one or more fibers. Preferably, the one or more fibers are glass fibers, woven fibers or staple fibers.

Further, the polymeric stud body may further comprise one or more of a pigment and a dye.

Preferably, the stud body is produced by injection molding or the like. Methods for its production are known in the art.

Preferably, the height h of the pin is in the range of from 5.50 to 8.50 mm. Preferably, when the stud body is polymeric, the height h of the pin is in the range of from 7.50 to 8.50 mm. Alternatively, preferably, when the stud body is metallic, the height h of the pin is in the range of from 5.5 to 6.5 mm.

In the context of the present invention, the tire studs according to the present invention are configured to be inserted into a tread of a pneumatic tire.

The present invention further relates to a pneumatic tire comprising at least one tire stud according to the present invention.

Preferably, the pneumatic tire further comprises a tread, wherein the tread comprises the at least one tire stud, more preferably a plurality of tire studs according to the present invention, which are embedded therein. The pin of the tire stud extends out of the tread.

Preferably, the pneumatic tire is a winter, snow and/or ice pneumatic tire.

The present invention is further illustrated by the following set of embodiments and combinations of embodiments resulting from the dependencies and back-references as indicated. In particular, it is noted that in each instance where a range of embodiments is mentioned, for example in the context of a term such as "The tire stud of any one of embodiments 1 to 4", every embodiment in this range is meant to be explicitly disclosed for the skilled person, i.e. the wording of this term is to be understood by the skilled person as being synonymous to "The tire stud of any one of embodiments 1, 2, 3 and 4". Further, it is explicitly noted that the following set of embodiments represents a suitably structured part of the general description directed to preferred aspects of the present invention, and, thus, suitably supports, but does not represent the claims of the present invention.

According to embodiment 1 of the present invention, a tire stud of the present invention comprises a stud body and a pin comprising a first portion P₁ and a second portion P₂, P₁ being adjacent to P₂ in a direction along the central axis (z) of the pin, P₁ projecting out of the stud body and P₂ being inserted in the stud body, wherein P1 has a polygonal cross section in a plane perpendicular to the central axis (z), said cross section being symmetrical with regard to an axis (y) within the plane, wherein the polygonal cross section has six sides being a first side C1, a second side C2, a third side C3, a fourth side C4, a fifth side C5 and a sixth side C6, wherein C1 is adjacent to C2 and the intersection of C1 and C2 is a point S(12) located on the axis (y), C1 and C2 form an angle a2 on the outer surface of the pin, and wherein 90° < a2 < 170°.

Embodiment 2: The tire stud of embodiment 1, wherein the width W of the polygonal cross section is in the range of from 2.2 to 3.8 mm, preferably of from 2.4 to 3.6 mm, the width W of the polygonal section being the distance between S(56) and S(34), S(56) being the intersection point of C5 and C6, and S(34) being the intersection point of C3 and C4.

Embodiment 3: The tire stud of embodiment 1 or 2, wherein one or more of the seven sides are planar, preferably each of the seven sides is planar.

Embodiment 4: The tire stud of any one of embodiments 1 to 3, wherein the one or more of the vertices of the polygonal cross section are chamfered, preferably the vertices of the polygonal cross section are chamfered.

Embodiment 5: The tire stud of any one of embodiments 1 to 4, wherein the height H of the polygonal cross section is in the range of from 1.5 to 1.9 mm, preferably of from 1.7 to 1.9 mm, the height H of the polygonal cross section being the distance between A and S(45), A being the intersection point between the axis (y) and the line passing by S(61) and S(23), S(23) being the intersection point of C2 and C3, S(45) being the intersection point of C4 and C5 and located on the axis (y), and S(61) being the intersection point of C6 and C1.

Embodiment 6: The tire stud of any one of embodiments 1 to 5, wherein in the polygonal cross section, the distance between S(12) and S(45) is in the range of from 1.1 to 1.6 mm, preferably in the range of from 1.25 to 1.45 mm, S(45) being the intersection point of C4 and C5 and located on the axis (y).

Embodiment 7: The tire stud of any one of embodiments 1 to 6, wherein C3 is parallel to C6.

Embodiment 8: The tire stud of any one of embodiments 1 to 7, wherein the length of C3 is substantially equal, more preferably equal to the length of C6; wherein preferably the length of C3 is in the range of from 0.3 to 0.7 mm, more preferably in the range of from 0.4 to 0.6 mm.

Embodiment 9: The tire stud of any one of embodiments 1 to 8, wherein 95° < a2 < 165°, preferably 105° < a2 < 160°, more preferably 120° < a2 < 155°.

Embodiment 10: The tire stud of any one of embodiments 1 to 9, wherein C4 is adjacent to C5 and the intersection of C4 and C5 is a point S(45) located on the axis (y), C4 and C5 form an angle a1 in the inner surface of the pin, with a1 < a2.

Embodiment 11: The tire stud of embodiment 10, wherein a1 > 75°, preferably a1 > 80°.

Embodiment 12: The tire stud of any one of embodiments 1 to 11, wherein the portion P1 projecting out the stud body has a height h(P1) in the range of from 1.0 to 1.7 mm, preferably of from 1.0 to 1.5 mm, preferably of from 1.0 to 1.4 mm.

Embodiment 13: The tire stud of any one of embodiments 1 to 12, wherein the polygonal cross section area of the pin is in the range of from 2.0 to 3.8 mm², preferably from 2.3 to 3.6 mm², more preferably in the range of from 2.4 to 3.5 mm².

Embodiment 14: The tire stud of any one of embodiments 1 to 13, wherein P2 has said polygonal cross section along the length of the pin.

Embodiment 15: A tire stud comprising a stud body and a pin comprising a first portion P'₁ and a second portion P'₂, P'₁ being adjacent to P'₂ in a direction along the central axis (z') of the pin, P'₁ projecting out of the stud body and P'₂ being inserted in the stud body, wherein P'₁ has a polygonal cross section in a plane perpendicular to the central axis (z'), said cross section being symmetrical with regard to an axis (y') within the plane, wherein the polygonal cross section has eight sides being a first side C'1, a second side C'2, a third side C'3, a fourth side C'4, a fifth side C'5, a sixth side C'6, a seventh side C'7 and an eight side C'8; wherein C'1 is adjacent to the second side C'2 and the intersection of C'1 and C'2 is a point S'(12) and C'4 is adjacent to C'5 and the intersection of C'4 and C'5 is a point S'(45), with S'(12) being symmetrical about the axis (y') to S'(45), and wherein C'1 and C'2 form an angle a'2, with 90° < a'2 < 170° and C'4 and C'5 form an angle a'3, with a'2 = a'3.

Embodiment 16: The tire stud of embodiment 15, wherein the width W' of the polygonal cross section is in the range of from 2.2 to 3.8 mm, preferably of from 2.4 to 3.6 mm, W' being the distance between S'(56) and S'(18), S'(56) being the intersection point of C'5 and C'6, and S'(81) being the intersection point of C'1 and C'8.

Embodiment 17: The tire stud of embodiment 15 or 16, wherein one or more of the eight sides are planar, preferably each of the eight sides is planar.

Embodiment 18: The tire stud of any one of embodiments 15 to 17, wherein the one or more of the vertices of the polygonal cross section are chamfered, more preferably the vertices of the polygonal cross section are chamfered.

Embodiment 19: The tire stud of any one of embodiments 15 to 18, wherein the height H' of the polygonal cross section is in the range of from 2.2 to 2.6 mm, preferably of from 2.3 to 2.5 mm, H' being the distance between C'7 and C'3 along the axis (y).

Embodiment 20: The tire stud of any one of embodiments 15 to 19, wherein 95° < a'2 < 160°, preferably 100° < a'2 < 150°.

Embodiment 21: The tire stud of any one of embodiments 15 to 20, wherein the line passing by S'(56) and S'(45) and the line passing by S'(81) and S'(12) form an angle a'1 in the inner surface of the pin, with a'1 < a'2 , S'(56) being the intersection point of C'5 and C'6, S'(45) being the intersection point of C'4 and C'5, S'(81) being the intersection point of C'8 and C'1 and S'(12) being the intersection point of C'1 and C'2.

Embodiment 22: The tire stud of embodiment 21, wherein a'1 > 80°, preferably a'1 > 90°, more preferably a'1 > 95°.

Embodiment 23: The tire stud of any one of embodiments 15 to 22, wherein the portion P'1 projecting out the stud body has a height h(P'1) in the range of from 1.0 to 1.7 mm, preferably of from 1.0 to 1.5 mm, more preferably of from 1.0 to 1.4 mm.

Embodiment 24: The tire stud of any one of embodiments 15 to 23, wherein the polygonal cross section area of the pin is in the range of from 2.5 to 3.5 mm², preferably in the range of from 2.75 to 3.25 mm².

Embodiment 25: The tire stud of any one of embodiments 1 to 24, wherein the pin comprises a metal and/or ceramic material, wherein the metal is one or more of tungsten carbide and steel, more preferably tungsten carbide.

Embodiment 26: The tire stud of any one of embodiments 1 to 25, wherein the stud body comprises, preferably essentially consists of, a metal, preferably aluminum.

Embodiment 27: The tire stud of any one of embodiments 1 to 25, wherein the stud body comprises at least one polymer, being preferably selected from the group consisting of polyketone (PK), such as PEEK, polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and mixtures of two or more thereof.

Embodiment 28: A tire or pneumatic tire comprising at least one tire stud according to any one of embodiments 1 to 27.

Embodiment 29: The tire of embodiment 28, further comprising a tread, wherein the tread comprises the at least one tire stud according to any one of embodiments 1 to 27, more preferably a plurality of said tire studs, which are embedded or inserted therein.

Embodiment 30: The pneumatic tire of embodiment 28 or 29, being a winter, snow and/or ice pneumatic tire.

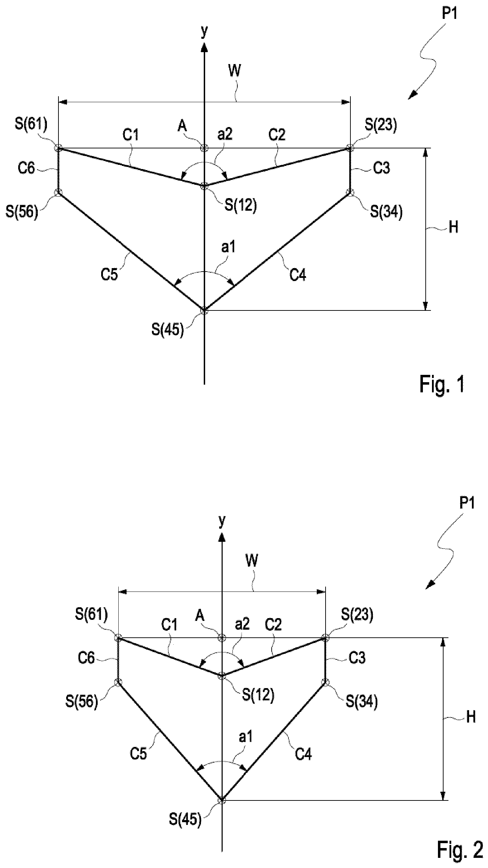

FIG. 1 and FIG.2 schematically represent cross sections of a first portion P₁ of the pin of a tire stud according to the present invention, the stud body not being represented in FIG.1 and 2. P1 has a polygonal cross section in a plane perpendicular to the central axis (z) of the pin, said cross section being symmetrical with regard to an axis (y) within the plane. The polygonal cross section has six sides being a first side C1, a second side C2, a third side C3, a fourth side C4, a fifth side C5 and a sixth side C6. C1 is adjacent to C2, C2 is adjacent to C3, C3 is adjacent to C4, C4 is adjacent to C5, C5 is adjacent to C6 and C6 is adjacent to C1. The intersection of C1 and C2 is a point S(12) located on the axis (y), C1 and C2 form an angle a2 on the outer surface of the pin, wherein 90° < a2 < 170°, preferably 95° < a2 < 165°, more preferably 105° < a2 < 160°, more preferably 120° < a2 < 155°. The intersection of C4 and C5 is a point S(45) located on the axis (y), C4 and C5 form an angle a1 in the inner surface of the pin, wherein preferably a1 < a2, more preferably a1 > 80°. The vertices, or the corners, of the polygonal cross section are preferably chamfered. The sides C1 to C6 are planar. The height H of the polygonal cross section is the distance between A and S(45). H preferably is in the range of from 1.5 to 1.9 mm. The width W of the pin is preferably in the range of from 2.2 to 3.8 mm, preferably of from 2.4 to 3.6 mm. The polygonal cross section area of the pin is preferably in the range of from 2.0 to 3.8 mm².

FIG. 3 schematically represents an external perspective view of the pin of a tire stud according to the present invention. As illustrated in FIG. 3, the pin has six vertical substantially planar, preferably planar, sides C1 to C6 with chamfered corners. The height h of the pin is preferably in the range of from 5.50 to 8.50 mm. Preferably, it depends on the material used for the stud body.

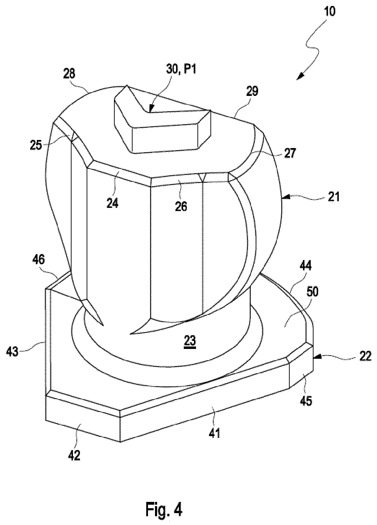

FIG. 4 schematically represents an external perspective view of a tire stud according to the present invention. The tire stud 10 comprises a stud body 20 and a pin 30. The pin 30 comprises a first portion P₁ and a second portion P₂, P₁ being adjacent to P₂ in a direction along the central axis (z) of the pin, P₁ projecting out of the stud body and P₂ being inserted in the stud body and not shown in/visible on FIG. 4. P₁ is adapted for contacting the road. The stud body 20 comprises three portions, namely a stump portion 21, a bottom portion 22 and a portion 23 bridging the portions 21 and 22. The stump portion 21 is adjacent to the bridging portion 23, the bridging portion 23 is adjacent to the bottom portion 22 in a direction along the central axis of the pin (which can also be the central axis if the stud body). The shape of the stump portion 21 may be shaped with a flat side 24 circumferentially between two concave hollows 25,26 and two convex sides 27,28 circumferentially separated by a third concave hollow 29. The outer peripheral surfaces of the stump portion 21 may contact and press against the inside surface of the installation holes of a tread, as is conventionally known. The cross-section of the stump portion 56 may alternatively be substantially triangular, quadrilateral, pentagonal, hexagonal (FIG. 4), or other polygonal shape. The bottom portion 22 may be a flange located opposite the first portion P1 of the pin 10. The cross-section of the bottom portion 22 may be mainly a tear-drop shape with three vertical, planar sides 41,42,43 and one vertical, semicircular side 44. Preferably, two small vertical, planar surfaces 45,46 interconnect the planar side 43 and the semicircular side 44; and the planar side 41 and the semicircular side 44, respectively. The cross-section of the bottom portion 22 may alternatively be a substantially triangular, quadrangular, pentagonal, or hexagonal shape. The bottom portion 22 preferably further includes a "saucer" configuration with an inclined surface 50 extending radially inward from the sides 41,42,43,44 away from P1 of the pin. Thus, the inclined surface 50 preferably takes on the tear-drop shape of the bottom portion 22, or whatever the shape of the bottom portion 22. The bridging portion 23 connects the stump portion 21 and the bottom portion 22. The portion 23 preferably has a smaller, or thinner, cross-section compared to the stump portion 21 and the bottom portion 22. The cross-section of the portion 23 may be generally oval-shaped. The radially outermost surface of the pin preferably comprises one or more chamfers.

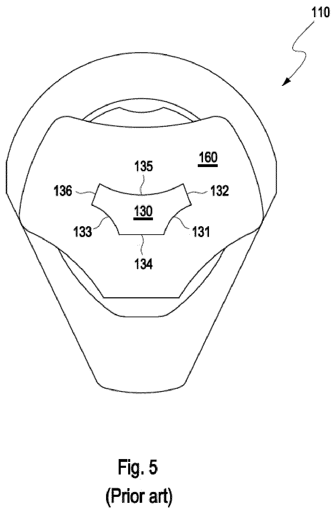

FIG. 5 schematically represents a cross section of a tire stud according to US 11,084,331 B2. The tire stud 110 comprises a pin 130 and a stud body 160. The pin 130 has a hexagonal-like shape extending radially outward from the outermost surface of the stud body. The plan view includes three vertical, concave curved hollows 131,133,135 with three vertical, generally planar sides 132, 134, 136. As opposed to the configuration disclosed in the prior art, the tire stud according to the present invention permits to improve the grip of the tire on an icy road. Indeed, thanks to the particular improved sharpness provided by the specific shape of the pin, one can greatly improve the tire performance under winter conditions without impairing the durability of the tire stud.

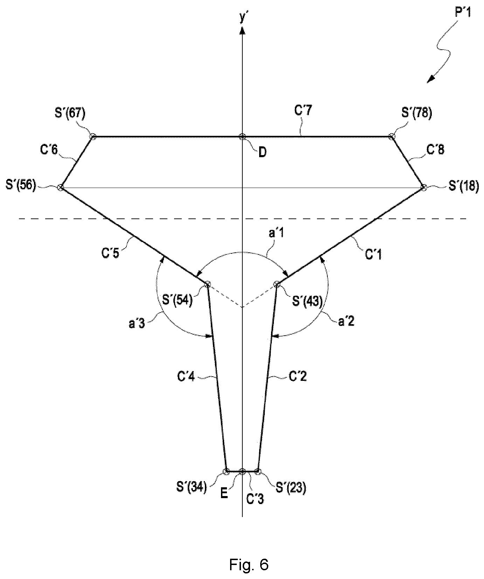

FIG. 6 schematically represents a cross section of a first portion P₁ of the pin of a tire stud according to the present invention, the stud body not being represented in FIG.6. P'₁ has a polygonal cross section in a plane perpendicular to the central axis of the pin, said cross section being symmetrical with regard to an axis (y') within the plane; wherein the polygonal cross section has eight sides being a first side C'1, a second side C'2, a third side C'3, a fourth side C'4, a fifth side C'5, a sixth side C'6, a seventh side C'7 and an eight side C'8. C'1 is adjacent to the second side C'2, C'2 is adjacent to C'3, C'3 is adjacent to C'4, C'4 is adjacent to C'5, C'5 is adjacent to C'6, C'6 is adjacent to C'7, C'7 is adjacent to C'8, and C'8 is adjacent to C'1. The intersection of C'1 and C'2 is a point S'(12) and the intersection of C'4 and C'5 is a point S'(45), with S'(12) being symmetrical about the axis (y') to S'(45). C'1 and C'2 form an angle a'2, with 90° < a'2 < 170° and C'4 and C'5 form an angle a'3, with a'2 = a'3. The width W' of the polygonal cross section is preferably in the range of from 2.2 to 3.8 mm, preferably of from 2.4 to 3.6 mm. The sides C'1 to C'8 are planar. The vertices, or the corners, of the polygonal cross section are preferably chamfered. The height H' of the polygonal cross section is in the range of from 2.2 to 2.6 mm, preferably of from 2.3 to 2.5 mm, H' being the distance between C'7 and C'3 along the axis (y'). C'7 is parallel to C'3. The line passing by S'(56) and S'(45) and the line passing by S'(81) and S'(12) form an angle a'1 in the inner surface of the pin, with a'1 < a'2 . Preferably a'1 > 80°, more preferably a'1 > 90°, more preferably a'1 > 95°. The portion P'1 projecting out the stud body (not shown in FIG.6) has a height h(P'1) in the range of from 1.0 to 1.7 mm, preferably of from 1.0 to 1.5 mm, more preferably of from 1.0 to 1.4 mm. The polygonal cross section area of the pin is preferably in the range of from 2.5 to 3.5 mm².

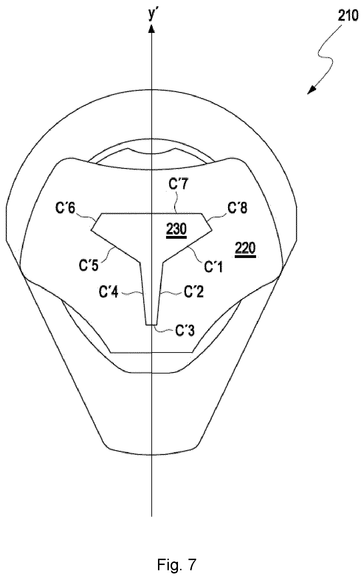

FIG. 7 schematically represents a cross section of a tire stud according to the present invention. The tire stud 210 comprises a pin 230 and a stud body 220. The polygonal cross section of the portion P'1 of the pin 230 has eight sides being a first side C'1, a second side C'2, a third side C'3, a fourth side C'4, a fifth side C'5, a sixth side C'6, a seventh side C'7 and an eight side C'8. The sides C'1 to C'8 are planar.

## Claims

1. A tire stud comprising a stud body (20) and a pin (30) comprising a first portion P₁, P'₁ and a second portion P₂, P'₂, P₁, P'₁ being adjacent to P₂ P'₂ in a direction along the central axis (z, z') of the pin, P₁, P'₁ projecting out of the stud body and P₂, P'₂ being inserted in the stud body (20), wherein P₁, P'₁ has a polygonal cross section in a plane perpendicular to the central axis (z, z'), said cross section being symmetrical with regard to an axis (y, y') within the plane, wherein
(i) the polygonal cross section has six sides, namely a first side C1, a second side C2, a third side C3, a fourth side C4, a fifth side C5 and a sixth side C6, wherein C1 is adjacent to C2 and the intersection of C1 and C2 is a point S(12) located on the axis (y), and wherein C1 and C2 form an angle a2 on the outer surface of the pin with 90° < a2 < 170°; or
(ii) wherein the polygonal cross section has eight sides, namely a first side C'1, a second side C'2, a third side C'3, a fourth side C'4, a fifth side C'5, a sixth side C'6, a seventh side C'7 and an eight side C'8, wherein C'1 is adjacent to the second side C'2 and the intersection of C'1 and C'2 is a point S'(12) and C'4 is adjacent to C'5 and the intersection of C'4 and C'5 is a point S'(45), with S'(12) being symmetrical about the axis (y') to S'(45), and wherein C'1 and C'2 form an angle a'2 with 90° < a'2 < 170° and C'4 and C'5 form an angle a'3, with a'2 = a'3.

2. The tire stud of claim 1, wherein the width W of the polygonal cross section is in the range of from 2.2 to 3.8 mm, the width W of the polygonal section being the distance between S(56) and S(34), S(56) being the intersection point of C5 and C6, and S(34) being the intersection point of C3 and C4.

3. The tire stud of claim 1 or 2, wherein one or more of said sides are planar.

4. The tire stud of at least one of the previous claims, wherein one or more of the vertices of the polygonal cross section are chamfered.

5. The tire stud of at least one of the previous claims, wherein the height H of the polygonal cross section is in the range of from 1.5 to 1.9 mm, the height H of the polygonal cross section being the distance between A and S(45), A being the intersection point between the axis (y) and the line passing by S(61) and S(23), S(23) being the intersection point of C2 and C3, S(45) being the intersection point of C4 and C5 and located on the axis (y), and S(61) being the intersection point of C6 and C1.

6. The tire stud of at least one of the previous claims, wherein 95° < a2 < 165°.

7. The tire stud of at least one of the previous claims, wherein C4 is adjacent to C5 and the intersection of C4 and C5 is a point S(45) located on the axis (y), C4 and C5 form an angle a1 in the inner surface of the pin, with a1 < a2 and/or with a1 > 75°.

8. The tire stud of at least one of the previous claims, wherein the width W of the polygonal cross section is in the range of from 2.2 to 3.8 mm, W being the distance between S'(56) and S'(18), S'(56) being the intersection point of C'5 and C'6, and S'(81) being the intersection point of C'1 and C'8.

9. The tire stud of at least one of the previous claims, wherein 95° < a'2 < 160°.

10. The tire stud of at least one of the previous claims, wherein the line passing by S'(56) and S'(45) and the line passing by S'(81) and S'(12) form an angle a'1 in the inner surface of the pin, with a'1 < a'2 and/or with a'1 > 80°, S'(56) being the intersection point of C'5 and C'6, S'(45) being the intersection point of C'4 and C'5, S'(81) being the intersection point of C'8 and C'1 and S'(12) being the intersection point of C'1 and C'2.

11. The tire stud of at least one of the previous claims, wherein the pin (30) comprises a metal and/or ceramic material, wherein the metal is preferably one or more of tungsten carbide and steel.

12. The tire stud of at least one of the previous claims, wherein the stud body (20) comprises one or more metals.

13. The tire stud of at least one of the previous claims, wherein the stud body (20) comprises at least one polymer, being selected from the group consisting of polyketone (PK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and mixtures of two or more thereof.

14. A tire comprising at least one tire stud (10) according to at least one of the previous claims, the tire preferably being a winter, snow and/or ice pneumatic tire.

15. The tire of claim 14 comprising a tread, wherein the tread comprises said at least one tire stud (10) embedded or inserted therein.
